# DEMANDE DE BREVET EUROPEEN

(11) **EP 1 958 833 A1**
(43) Date de publication de la demande: **20.08.2008**
(21) Numéro de dépôt: 08305016.1
(22) Date de dépôt: 06.02.2008
(51) Int. Cl.: B60T 8/34, B60T 17/22

(54) **Dispositif de réglage de débit de liquide de frein dans un bloc électro-hydralique de circuit de freinage de véhicule**

(30) Priorité: 19.02.2007 FR 0753323
(71) Demandeur: Peugeot Citroën Automobiles SA, 78943 Vélizy-Villacoublay Cedex (FR)
(72) Inventeur: Cortada, Ludovic, 91660 Mèreville (FR); Tassin, Eric, 77290 Mitry Mory (FR)

(57) **Abrégé**

Le dispositif présente, en plus des positions correspondantes aux différentes régulations conventionnelles du circuit de freinage, une position supplémentaire dans laquelle la section de passage de liquide de frein est plus grande pour permettre un remplissage plus rapide du circuit de freinage pendant la durée des phases de montage du véhicule, ladite position supplémentaire étant active seulement pendant ladite durée et toujours inhibée durant la vie du véhicule.

## Description

La présente invention concerne un dispositif de réglage de débit de fluide, notamment de liquide de frein dans un bloc électro-hydraulique de circuit de freinage de véhicule, en particulier de véhicule automobile. Elle concerne également un bloc électro-hydraulique de circuit de freinage, qui comporte de tels dispositifs de réglage de débit du liquide de frein.

Le fonctionnement d'un circuit de freinage est le suivant : la pédale de frein agit sur un maître-cylindre qui a pour rôle d'augmenter la pression dans le circuit hydraulique. Cette pression agit sur des récepteurs, freins à tambours ou freins à disques, ce qui permet de ralentir et/ou de stopper le véhicule. De manière conventionnelle, un circuit de freinage actuel est constitué d'éléments émetteurs (pédale de frein, amplificateur de freinage, maître-cylindre à deux chambres séparées appelé tandem), d'éléments récepteurs (tambours, étriers), d'éléments proprement hydrauliques (bocal de frein, embrayage) et du bloc électro-hydraulique communément appelé bloc ABS/ESP. L'ESP, acronyme de « Electronic Stability Program », est un équipement de sécurité active destiné à améliorer le contrôle de trajectoire. L'ABS, acronyme de « Antiblockiersystem », est un système électronique d'anti- blocage des freins.

Lors du montage en usine terminale, plusieurs éléments, constituant le circuit de freinage, sont reliés entre eux par des canalisations dédiées. Un contrôle d'étanchéité permet de garantir un bon assemblage du circuit de freinage, avant d'effectuer son remplissage par le liquide de frein au poste de travail suivant. Plusieurs opérations contribuent à la bonne réalisation du procédé.

Le circuit de freinage n'est pas un circuit « auto purgeant ». Pour cette raison, il est très important d'éliminer l'air avant le remplissage de liquide de frein. Pour satisfaire cette condition préalable, on réalise une première étape de mise en dépression du circuit, suivie d'une deuxième étape dite de gavage (remplissage à pression constante) de liquide de frein « DOT » (DOT signifie qu'il s'agit d'un liquide de frein classé selon la terminologie du Département des transports Américain), lequel liquide a été préalablement dégazé, le remplissage se faisant par l'orifice du réservoir hydraulique. Une troisième étape consiste à réaliser la mise à niveau finale.

Lors du remplissage de liquide de frein du circuit de freinage, selon le procédé ci-dessus, le liquide de frein traverse obligatoirement le bloc électro-hydraulique avant d'atteindre les éléments récepteurs mentionnés précédemment.

Dans le but de garantir une prestation client spécifiée dans le cahier des charges des constructeurs automobiles, les fournisseurs des blocs électro-hydrauliques réduisent la section de passage dédiée aux roues arrière. Cette réduction s'effectue au niveau des électrovannes présentes dans le bloc électro-hydraulique. Elle a pour but de casser le gradient de pression permettant ainsi une meilleure répartition des forces lors des phases de freinage.

Cette réduction de section de passage des électrovannes a pour conséquence d'augmenter très sensiblement le temps de remplissage du circuit de freinage lors du montage de ce dernier en usine terminale. Pour exemple, la diminution du diamètre de la section de passage de l'électrovanne d'admission de quelques dixièmes de millimètres entraîne une augmentation de plusieurs dizaines de secondes du remplissage du circuit de freinage.

Le but de la présente invention est de proposer un dispositif de réglage de débit de fluide, notamment de liquide de frein dans un bloc électro-hydraulique de circuit de freinage, qui permette un remplissage plus rapide en liquide de frein du circuit de freinage, en particulier lors du montage de ce dernier en usine terminale.

Un autre but de la présente invention est de proposer un tel dispositif qui garantisse aussi la prestation client déjà mentionnée, à savoir qui garantisse un freinage plus fort sur l'essieu avant afin de garantir sa stabilité lors des phases de décélération.

Un autre but de la présente invention est de proposer un tel dispositif, qui soit de conception simple, de réalisation aisée, qui soit robuste, fiable et économique.

Un autre but de la présente invention est de proposer un bloc électro-hydraulique de circuit de freinage de véhicule, qui comporte de tels dispositifs de réglage de débit du liquide de frein.

Pour parvenir à ces buts, la présente invention conçoit un nouveau dispositif de réglage de débit de fluide, notamment de liquide de frein dans un bloc électro-hydraulique de circuit de freinage de véhicule, en particulier de véhicule automobile. Ce nouveau dispositif présente, en plus des positions correspondantes aux différentes régulations conventionnelles du circuit de freinage, une position supplémentaire dans laquelle la section de passage de liquide de frein est plus grande pour permettre un remplissage plus rapide du circuit de freinage lors du montage du véhicule, ladite position supplémentaire étant inhibée durant la vie du véhicule.

Selon un premier mode de réalisation de l'invention, le dispositif est constitué d'une électrovanne à trois positions, deux positions à section de passage de fluide spécifiques destinées aux régulations conventionnelles (les régulations conventionnelles ABS/ESP) et une troisième position à section de passage de fluide plus grande destinée au remplissage du circuit de freinage, ladite troisième position étant activée seulement lors du montage du circuit de freinage.

De préférence, ladite troisième position est obtenue par l'excitation d'une seconde bobine d'électroaimant de l'électrovanne, l'excitation de ladite seconde bobine d'électroaimant entraînant une plus grande ouverture de la section de passage du liquide de frein que l'ouverture provoquée par l'excitation de la première bobine d'électroaimant de l'électrovanne.

Selon un deuxième mode de réalisation de l'invention, le dispositif est constitué par une première électrovanne à deux positions, ladite position supplémentaire étant obtenue en disposant, en parallèle de la première électrovanne à deux positions, une canalisation de section plus élevée qui est couplée avec une seconde électrovanne, ladite seconde électrovanne fonctionnant en « tout ou rien » et n'étant activée que lors du montage du circuit de freinage.

Selon un troisième mode de réalisation de l'invention, ladite seconde électrovanne est remplacée par un limiteur de pression, le limiteur étant inhibé pendant les phases de montage du circuit de freinage.

Selon un quatrième mode de réalisation de l'invention, le dispositif est constitué par une première électrovanne à deux positions, ladite position supplémentaire étant obtenue en disposant une seconde électrovanne à l'opposé de la première électrovanne dans la même canalisation de passage du liquide de frein, ladite seconde électrovanne étant une électrovanne fonctionnant en « tout ou rien » qui n'est activée que lors du montage du circuit de freinage pour libérer une section maximale pour le passage de liquide de frein dans ladite canalisation.

L'invention fournit aussi un nouveau bloc électro-hydraulique de circuit de freinage de véhicule dans lequel les électrovannes d'admission arrière sont des électrovannes conformes aux dispositifs de réglage de débit décrits ci-dessus dans leurs grandes lignes.

Les électrovannes d'admission avant et/ou les électrovannes d'échappement peuvent également être des électrovannes conformes auxdits dispositifs de réglage de débit décrits ci-dessus.

D'autres buts, avantages et caractéristiques de l'invention apparaîtront dans la description qui suit de plusieurs modes de réalisation, non limitatifs de l'objet et de la portée de la présente demande de brevet, accompagnée de dessins dans lesquels :
- la figure 1 est un schéma d'un circuit de freinage détaillant les composants, et notamment le bloc électro-hydraulique,
- la figure 2 est un schéma illustrant les différentes positions maximales admissibles du dispositif de réglage de débit de liquide de frein dans le bloc électro-hydraulique au cours du temps, selon le principe de la présente invention,
- la figure 3 représente, de manière schématique, un premier mode de réalisation du dispositif de réglage de débit de liquide de frein dans le bloc électro-hydraulique de circuit de freinage, selon la présente invention,
- les figures 4A et 4B représentent, de manière schématique, une première variante de réalisation du dispositif de la figure 3, selon la présente invention, la figure 4B étant une vue détaillée de la zone désignée IV A de la figure 4A,
- la figure 5 et 6 représentent, de manière schématique, deux différents dispositifs de la figure 4B, selon la présente invention, et
- la figure 7 représente, de manière schématique, une troisième variante de réalisation du dispositif de la figure 3, selon la présente invention.

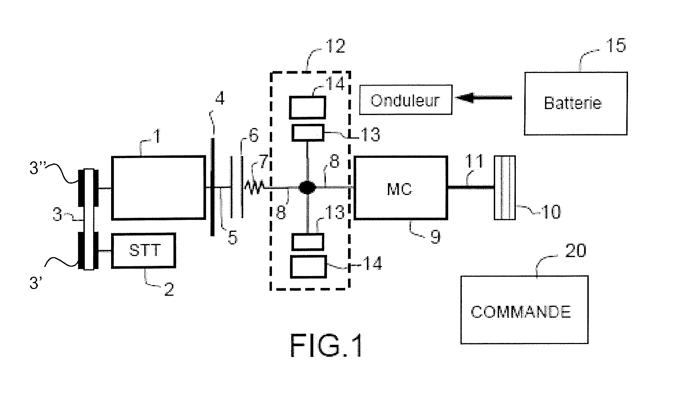

En référence au schéma de la figure 1, on a représenté un circuit de freinage de véhicule automobile. Ce circuit comprend, de manière conventionnelle, un ensemble d'éléments hydrauliques, référencé 1 de manière générale, un ensemble ou bloc électro-hydraulique 2 et un ensemble de récepteurs, référencé 3 de manière générale.

L'ensemble d'éléments proprement hydrauliques 1, non décrit en détail, comporte notamment le bocal de frein, l'embrayage et le maître-cylindre tandem.

L'ensemble de bloc électro-hydraulique 2 comporte, de manière conventionnelle, un double circuit impliquant l'utilisation d'un maître-cylindre tandem : un premier circuit 2A relie les roues avant gauche et arrière droit, et un second circuit 2B relie les autres roues.

Le circuit 2A comprend une électrovanne de limitation de pression USV1, une électrovanne de coupure haute pression HSV1, des électrovannes d'admission arrière droit EVHR et avant gauche EVVL, des électrovannes d'échappement avant gauche AVVL et arrière droit AVHR.

Le circuit 2B comprend une électrovanne de limitation de pression USV2, une électrovanne de coupure haute pression HSV2, des électrovannes d'admission avant droit EVVR et arrière gauche EVHL, des électrovannes d'échappement avant droit AVVR et arrière gauche AVHL.

L'ensemble de récepteurs 3 comporte deux sous-ensembles 3A et 3B. Le sous-ensemble 3A comporte les tambours ou étriers de frein des roues avant gauche VL et arrière droit HR. Le sous-ensemble 3B comporte les tambours ou étriers de frein des roues avant droit VR et arrière gauche HL.

Lors du montage du circuit de freinage en usine terminale, plusieurs des différents composants de ces ensembles 1, 2 et 3 sont reliés entre eux par des canalisations. Une mise en dépression du circuit est réalisée, avant d'injecter le liquide de frein DOT, préalablement dégazé, par l'orifice de remplissage de liquide de frein. Le liquide de remplissage traverse le bocal de frein, le maître cylindre tandem, puis le bloc électro-hydraulique 2 pour remplir les éléments récepteurs de l'ensemble 3 (étriers et tambours de frein).

Le principe de la présente invention consiste à perfectionner les électrovannes, afin d'intégrer une position supplémentaire dans laquelle la section de passage de fluide est plus grande et diminuer ainsi le temps de remplissage du circuit de freinage.

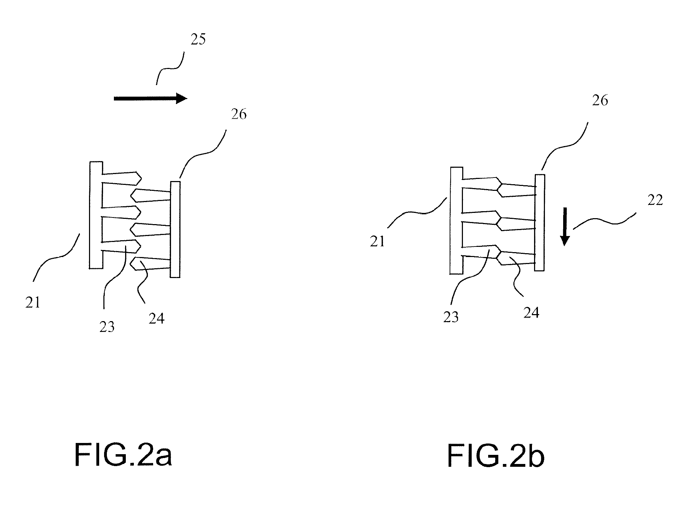

On a illustré ce principe sur le graphe de la figure 2. L'axe des abscisses représente le temps de vie du dispositif de réglage de débit selon l'invention en deux parties : une première durée, référencée D₀, de 0 à T_{M}, qui correspond au temps des phases de montage du circuit de freinage en usine terminale, et une durée au-delà de T_{M} qui correspond à l'utilisation du système de freinage.

Selon le principe de l'invention, le dispositif de réglage de débit selon la présente invention présente une position supplémentaire, référencée P₂, dans laquelle la section de passage du liquide de frein est plus grande, de manière à diminuer le temps de remplissage du circuit de freinage, lors du montage du circuit en usine terminale. Cette position P₂ n'est activée que lors des phases de montage, à savoir les phases de tirage au vide et de remplissage de la durée D₀. Durant la vie du véhicule, c'est-à-dire au-delà de T_{M}, la position P₂ est inhibée et le dispositif de réglage de débit oscille entre une position ouverte P₁ et une position fermée P₀.

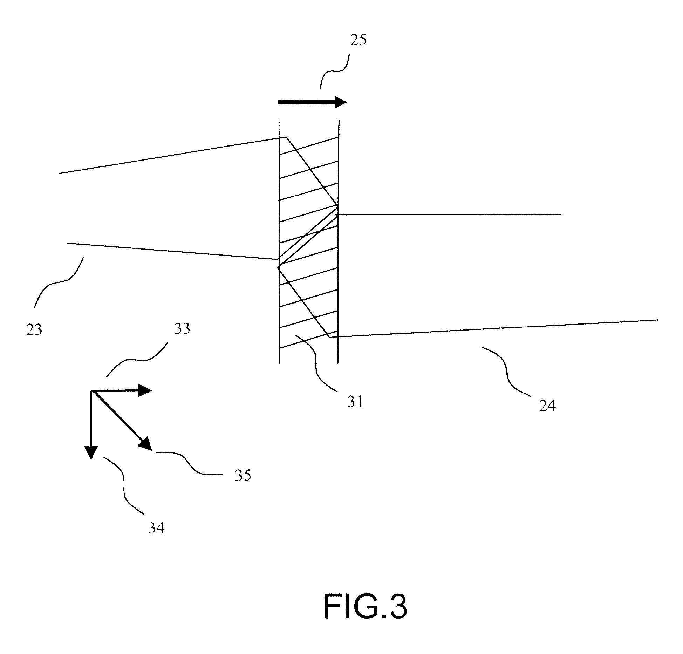

La figure 3 représente, de manière schématique, un premier mode de réalisation du dispositif de réglage de débit du liquide de frein de bloc électro-hydraulique de circuit de freinage, selon la présente invention, qui permet d'avoir une section de passage de liquide de frein plus importante pour un remplissage plus rapide lors du montage du circuit de freinage en usine terminale.

La canalisation hydraulique 100 de liquide de frein 101, interne au bloc hydraulique (non représenté), présente une section de passage qui peut être plus ou moins réduite par l'insertion transversale du plongeur 15 de l'électrovanne 10 à trois positions. L'électrovanne 10 comporte deux bobines d'électroaimant, 11 et 12, de part et d'autre de la tête de piston du plongeur 15 en position P₁ représentée sur la figure 3, et des ressorts 21 et 22, également de part et d'autre de la tête de piston du plongeur 15 dans la position de la figure 3, de manière à déplacer contre des moyens élastiques le plongeur 15 dans un sens et dans un autre par rapport à la position médiane représentée sur la figure 3. Le mouvement de translation du plongeur 15 dans un sens et dans l'autre est illustré par la double flèche T. La section de passage peut être agrandie en P₂ pour le liquide pendant la phase de remplissage, afin de diminuer les pertes de charge induites par cette dernière. Cet agrandissement de la section de passage s'effectue par excitation de la bobine 11. La bobine 11 n'est jamais excitée, et par conséquent la position P₂ est totalement inhibée, en dehors des phases de montage du circuit de freinage en usine terminale. La section de passage oscille entre P₀ et P₁ sous l'effet de l'excitation de la bobine 12 hors des phases de montage. On a, par conséquent, un dispositif de réglage de débit du liquide de frein 101 dans la canalisation 100 qui répond à la fois à l'exigence générée du point de vue « prestation client » mentionnée précédemment et à l'exigence de remplissage plus rapide pendant les seules phases de montage en usine terminale.

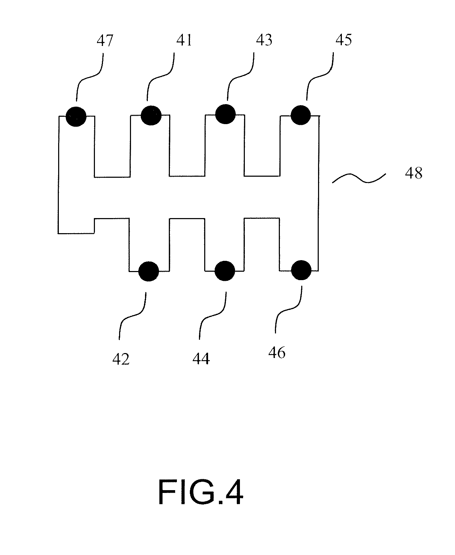

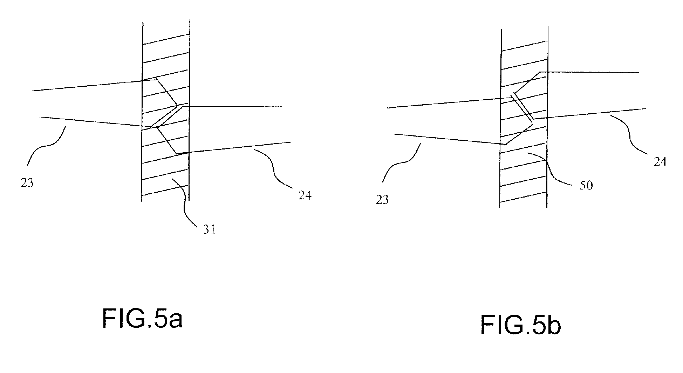

En référence aux figures 4A, 4B et 5, selon un autre mode de réalisation de l'invention, la canalisation hydraulique 100 de liquide de frein présente une section de passage qui peut être plus ou moins réduite par l'insertion transversale du plongeur 25 d'une électrovanne 20 à deux positions (voir figure 5). En parallèle à l'électrovanne 20 et à la canalisation 100, il est prévu une canalisation 200, de section de passage plus élevée que celle de la canalisation 100 dans la zone de l'électrovanne 20. Cette canalisation 200 est couplée avec une autre électrovanne 30. Dans ce cas, l'électrovanne 30 de la canalisation 200 est une électrovanne à deux positions, de type « tout ou rien », activée uniquement durant les phases de montage du circuit de freinage. L'électrovanne 20 est également une électrovanne à deux positions, qui sont les positions P₀ et P₁, mentionnées précédemment dans l'exposé du principe de l'invention. L'ouverture de l'électrovanne 30 fournit la position P₂ de remplissage du liquide de frein en permettant un débit maximal à travers une section de passage maximale. Les flèches référencées f illustrent le sens du débit de liquide de frein.

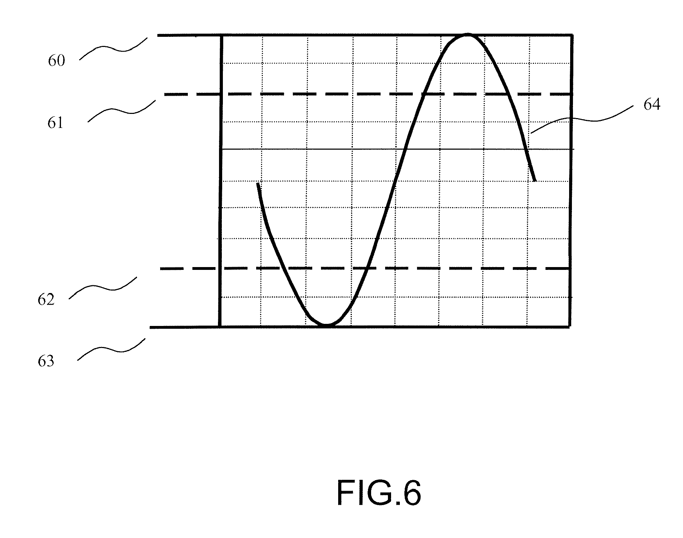

En variante du mode de réalisation décrit ci-dessus, il est possible de remplacer l'électrovanne 30 de la canalisation en parallèle 200 par un limiteur de pression 40 (figure 6). Dans ce cas, le limiteur de pression 40 occasionne une section de passage supplémentaire uniquement lors des phases de montage du circuit de freinage du fait des faibles pressions de remplissage comparées à celle durant la vie du véhicule.

En référence à la figure 7, selon un autre mode de réalisation de l'invention, les trois positions P₀, P₁ et P₂ sont obtenues par la conjonction de deux électrovannes 50 et 60, situées l'une par rapport à l'autre, de manière opposée, sur la canalisation de passage 100. Chacune des électrovannes 50, 60, est une électrovanne à deux positions. La première électrovanne 50 dans laquelle le plongeur 55 ne s'active que pendant la vie du véhicule (i.e. durant les différentes phases de freinage) entre les positions P₀ et P₁; l'électrovanne 60 dans laquelle le plongeur 65 étant inerte dans sa position réduisant la section de passage du fluide. La position P₂ est obtenue lorsque les deux électrovannes, 50 et 60, placent les plongeurs 55 et 65 dans une position qui ne réduit pas la section de passage du fluide, la section de passage de fluide étant alors maximale.

La présente invention se rapporte également à un bloc électro-hydraulique de circuit de freinage de véhicule. Les électrovannes d'admission arrière, désignées EVHL et EVHR sur la figure 1, sont des dispositifs de réglage de débit conformes aux dispositifs de réglage de débit décrits ci-dessus dans leurs différents modes de réalisation. Il est en effet important de remplacer les électrovannes d'admission arrière par les dispositifs selon l'invention à trois positions, parce que le temps de remplissage d'un circuit de freinage de véhicule dépend en premier lieu de ces électrovannes d'admission arrière.

Le remplacement des électrovannes conventionnelles du bloc électro-hydraulique par des dispositifs de réglage de débit tels que décrits ci-dessus peut aussi être étendu aux électrovannes d'admission avant (EVVR, EVHR) et aux électrovannes d'échappement (AVVR, AVHL, AVVL, AVHR).

La présente invention présente de nombreux avantages, parmi lesquels les avantages suivants :
- une diminution substantielle du temps de « remplissage frein » du véhicule en usine terminale, de l'ordre de 30 secondes, et cette diminution du temps de remplissage fait passer l'opération de « remplissage frein » de tous les véhicules de trois à deux pas d'assemblage sur les lignes de fabrication automobile, ce qui permet d'économiser une machine de « remplissage frein » et les coûts de maintenance associés,
- une diminution des pertes de charge induites par le bloc électro-hydraulique lors des phases de remplissage, tout en garantissant la prestation client exigée mentionnée précédemment.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif de réglage de débit de liquide de frein dans un bloc électro-hydraulique (2) de circuit de freinage de véhicule, en particulier de véhicule automobile, présentant, en plus des positions (P₀, P₁) correspondantes aux différentes régulations conventionnelles du circuit de freinage, une position supplémentaire (P₂) dans laquelle la section de passage de liquide de frein est plus grande pour permettre un remplissage rapide du circuit de freinage lors du montage du véhicule, **caractérisé en ce que** lesdites positions sont celles d'au moins un organe de régulation de la section de passage de liquide dans au moins une électrovanne, l'organe étant adapté à être activé dans la position supplémentaire seulement durant des phases de tirage au vide et de remplissage lors du montage du circuit en usine et étant adapté à être désactivé de la position supplémentaire durant la vie du véhicule.

2. Dispositif selon la revendication 1, **caractérisé en ce qu'**il comporte une électrovanne (10) à trois positions, deux positions (P₀, P₁) à section de passage de fluide spécifiques destinées aux régulations conventionnelles et une troisième position (P₂) à section de passage de fluide plus grande destinée au remplissage du circuit de freinage.

3. Dispositif selon la revendication 2, **caractérisé en ce que** ladite troisième position (P₂) est obtenue par l'excitation d'une seconde bobine d'électroaimant (11) de l'électrovanne (10), l'excitation de ladite seconde bobine d'électroaimant (11) entraînant une plus grande ouverture de la section de passage du liquide de frein que l'ouverture provoquée par l'excitation de la première bobine d'électroaimant (12) de l'électrovanne (10).

4. Dispositif selon la revendication 1, **caractérisé en ce qu'**il est constitué par une première électrovanne (20) à deux positions (P₀, P₁), ladite position supplémentaire (P₂) étant obtenue en disposant, en parallèle de ladite première électrovanne (20) à deux positions, une canalisation (200) qui est couplée avec une seconde électrovanne (30), de section plus élevée, ladite seconde électrovanne (30) fonctionnant en « tout ou rien ».

5. Dispositif selon la revendication 1, **caractérisé en ce qu'**il est constitué par une première électrovanne (50) à deux positions, ladite position supplémentaire (P₂) étant obtenue en disposant une seconde électrovanne (60) à l'opposé de la première électrovanne (50) dans la même canalisation (100) de passage du liquide de frein, ladite seconde électrovanne (60) étant une électrovanne fonctionnant en « tout ou rien » et libérant une section maximale pour le passage de liquide de frein dans ladite canalisation (100) quand son organe de régulation est activé.

6. Bloc électro-hydraulique (2) de circuit de freinage de véhicule, **caractérisé en ce qu'**au moins les électrovannes d'admission arrière (EVHL, EVHR) sont des électrovannes conformes à l'une quelconque des revendications 1 à 5, de façon à permettre un remplissage rapide du circuit de freinage en liquide de frein lors des phases de montage dudit circuit de freinage en usine terminale de fabrication automobile.

7. Bloc électro-hydraulique (2) selon la revendication 6, **caractérisé en ce que**, de plus, les électrovannes d'admission avant (EVVR, EVVL) sont des électrovannes conformes à l'une quelconque des revendications 1 à 5.

8. Bloc électro-hydraulique (2) selon l'une quelconque des revendications 6 et 7, **caractérisé en ce que**, de plus, les électrovannes d'échappement (AVVR, AVHL, AVVL, AVHR) sont des électrovannes conformes à l'une quelconque des revendications 1 à 5.
